Europäisches Patentamt

European Patent Office

Office européen des brevets

(19)

(11) Numéro de publication: **0 374 336 B1**

(12)

# FASCICULE DE BREVET EUROPEEN

(45) Date de publication de fascicule du brevet: **11.11.92**  (51) Int. Cl.⁵: **B61D 23/00**, B60P 1/04

(21) Numéro de dépôt: **88440107.6**

(22) Date de dépôt: **22.12.88**

(54) **Structure de camion benne.**

(43) Date de publication de la demande:
**27.06.90 Bulletin 90/26**

(45) Mention de la délivrance du brevet:
**11.11.92 Bulletin 92/46**

(84) Etats contractants désignés:
**AT BE CH DE ES FR GB GR IT LI LU NL SE**

(56) Documents cités:
**DD-A- 60 494
DE-C- 510 987
FR-A- 596 836
FR-A- 749 022
US-A- 3 093 254**

(73) Titulaire: **Guillaume, Bernard
89 Vallon des Vaux
F-06800 Cagnes sur Mer(FR)**

Titulaire: **Guillaume, Martine
87 Chemin du Vallon des Vaux
F-06800 Cagnes-sur-mer(FR)**

(72) Inventeur: **Guillaume, Bernard
89 Vallon des Vaux
F-06800 Cagnes sur mer(FR)**

(74) Mandataire: **Hautier, Jean-Louis
Cabinet Hautier Office Méditerranéen de
Brevets d'Invention et de Marques 24 rue
Masséna
F-06000 Nice(FR)**

## Description

La présente invention concerne un nouveau mode de construction des véhicules à benne (camions "semi bennes", remorques bennes et analogues) largement utilisés notamment dans les travaux publics, pour la manipulation et le transport de nombreux matériaux. Ces véhicules comportent une benne, montée basculante d'avant en arrière, et l'invention vise la structure de ces bennes. Actuellement, ces bennes comportent essentiellement un châssis fixe, formé lui-même par deux longerons reliés par des traverses et des caissons soudés électriquement, et supportent une caisse basculante réalisée à partir d'un fond en acier comportant des angles à pans coupés, raidi lui-même par des profilés et de côtés également raidis par des profilés.

Ce mode de construction usuel, bien qu'extrêmement répandu, comporte encore de nombreux inconvénients :

- le châssis supporte la caisse à une hauteur relativement élevée, ce qui affecte la stabilité du véhicule.
- la fabrication implique de nombreuses opérations de découpes, soudures, montages etc., dont le coût est important.
- à l'inverse, pour maintenir le coût du véhicule à un niveau acceptable, on doit se contenter d'acier relativement bon marché, donc ayant une résistance aux chocs et une limite élastique assez faibles. Il en résulte un poids total du véhicule relativement élevé, en raison de la nécessité de tous les renforts destinés à supporter la charge prévue.
- au surplus, ce mode de construction impose à l'avance le type d'essieu, non interchangeable, pour chaque type de châssis.

L'état de la technique peut être défini par les brevets suivants :

- FR.749.022 : ce brevet a pour objet des perfectionnements aux camions-citernes. Il décrit notamment le mode de réalisation représenté dans les figures 5 et 6. La citerne forme elle-même le châssis de la remorque et repose directement sur les essieux porteurs et présente à l'avant une forme spéciale pour reposer sur le tracteur. La carrosserie est alors montée sur des supports fixés sur la paroi de la citerne.

Il ne s'agit pas dans ce cas d'une benne basculante mais d'un camion-citerne. Il n'y a pas de corrélation entre le caisson et le châssis-berceau.

- DD.60.494 : ce brevet décrit une benne classique qui repose de manière classique sur son châssis qui est usuel. Seule nouveauté, la caisse ou caisson est à double fond et permet d'obtenir un caisson demi-cylindrique.

Il n'y a pas encastrement du caisson de la benne dans un châssis-berceau, mais seulement une forme particulière du fond du caisson de la benne montée sur un châssis classique.

- FR-A-596.836 : ce brevet décrit un support pour réservoirs de camions-réservoirs caractérisé par le fait qu'il est formé de deux pièces en tôle comprenant chacune une paroi latérale et deux ailes pliées vers l'intérieur et s'étendant le long des bords supérieur et inférieur de la paroi suivant le contour du support, ces deux pièces étant unies dans la position d'emboîtement de leurs ailes tournées les unes vers les autres de façon à constituer une paroi supérieure double et une paroi inférieure double entre deux âmes de support espacées formées par les parois latérales. Les deux pièces formant le support sont unies l'une à l'autre par des soudures prévues sur les ailes emboîtées. La partie médiane des ailes supérieures des pièces du support et le bord supérieur des âmes reçoivent la forme d'un berceau ou une autre forme concave propre à constituer un siège de réservoir. Une plaque d'assise courbe repose sur la paroi concave formant berceau et est unie à cette paroi.

Ce brevet ne décrit pas une benne basculante. Or les problèmes posés par une benne basculante sont très spécifiques.

Le berceau est réalisé par une ou plusieurs traverses qui reçoivent simplement la base du réservoir. Il n'y a pas d'encastrement. La preuve : des sangles ou bandes sont nécessaires pour maintenir la citerne sur les traverses-supports.

- US 3,093,254 : l'invention concerne les wagons et plus particulièrement un wagon dans lequel le corps est conçu pour servir de mécanisme de roulement, à la façon d'une structure de liaison entre les roues avant et arrière et l'essieu du véhicule.

L'objet principal de l'invention est de fournir un wagon original, peu cher et robuste qui utiliserait la structure d'une caisse, de forme générale semi-cylindrique, qui s'étendrait entre les roues de devant et de derrière et l'essieu, et dans lequel la structure de la caisse est utilisée en tant que zone de torsion entre les roues avant et arrière.

Un objet plus particulier de l'invention est de procurer une caisse originale en tôle d'acier, de forme droite, qui est incurvée transversalement entre ses extrémités et qui est montée sur un berceau original, reposant sur les roues avant et arrière et sur l'essieu, les raccordements entre les roues avant et arrière et l'essieu et la caisse ayant lieu à des emplacements qui permettent le support maximum pour la caisse et tiennent compte des mouvements de torsion des roues et de l'essieu, ce qui autorise le wagon à se déplacer sur un terrain cahoteux.

Ce brevet décrit un wagon semi-cylindrique pour le transport des graines. La citerne est simplement posée sur le châssis.

Des câles empêchent la citerne de rouler. Il n'y a pas d'encastrement caisson-berceau pour obtenir les avantages spécifiques des bennes basculantes.

La présente invention permet d'éliminer tous ces inconvénients, grâce à un mode de construction original du couple châssis-caisse.

Selon l'invention, la caisse, qui sera désignée dans la suite par "le caisson, est constituée par un volume d'allure générale prismatique ou cylindrique obtenu par pliage ou cintrage à la presse d'une tôle rectangulaire, et le châssis qui sera désigné dans la suite par "le berceau" est constitué également par un volume d'allure générale prismatique ou cylindrique également obtenu par pliage ou cintrage d'une tôle rectangulaire, ces deux portions ayant des sections pratiquement concentriques et de mêmes dimensions, de manière telle que la portion inférieure dudit caisson s'encastre exactement dans ledit berceau.

Le véhicule de type à benne, comportant un caisson basculant d'avant en arrière et reposant à l'arrêt dans un berceau de support fixe sur le châssis du véhicule, est caractérisé en ce que ledit caisson et ledit berceau sont constitués par des volumes à sections transversales concentriques de manière que ledit caisson s'encastre dans ledit berceau, ledit caisson a une surface inférieure convexe vers le bas dans un plan vertical, parallèle à l'axe horizontal transversal de basculement dudit caisson, ledit berceau ayant une surface supérieure concave vers le haut dans ledit plan vertical, lesdites surfaces inférieures convexes et supérieures concaves sont encastrées l'une dans l'autre lorsque ledit caisson est dans sa position la plus basse, de telle sorte que la partie inférieure dudit caisson est encastrée dans ledit berceau.

Lesdites sections transversales sont en forme de polygones réguliers à même nombre de côtés.

Lesdites sections transversales sont en forme de polygones non réguliers dont le nombre et la dimension des côtés se correspondent entre le caisson et le berceau de manière à assurer un encastrement.

Lesdites sections transversales sont circulaires.

Bien entendu, les deux éléments de ce couple caisson berceau peuvent avoir toutes dimensions voulues, notamment en ce qui concerne la longueur, le diamètre et l'épaisseur de la tôle utilisée, selon l'utilisation prévue pour le matériel, et conformément aux tolérances légales.

Toutefois, l'angle d'ouverture de chaque volume cylindrique sera variable, d'une part pour permettre l'encastrement du caisson dans le berceau, d'autre part en fonction de la destination de l'engin. Ainsi, en premier lieu, le berceau aura une ouverture comprise entre 90 et 120° environ, pour permettre au caisson de basculer et venir se placer horizontalement sans se coincer. En second lieu, l'ouverture du caisson pourra varier entre par exemple 180° (volume semi-cylindrique) et un cylindre complet (comportant alors des goulottes ou "trou d'hommes") pour disposer du volume souhaité. Par exemple, pour une semi-benne céréalière, cet angle peut être de 270° (trois quarts de cercle).

La construction de ces nouveaux véhicules selon l'invention étant très simplifiée, ne nécessitant qu'une presse puissante, il devient possible, sans en grever le coût, d'utiliser une qualité d'acier très supérieure, tel que par exemple celui commercialisé par la société I.M.S. SERVICES sous la dénomination "CREUSABRO 5000" (marque déposée), dont la résistance est de huit fois supérieure à celle des aciers actuellement utilisés pour le même usage. Compte tenu des propriétés mécaniques de cette qualité d'acier, il devient alors possible d'utiliser des épaisseurs de tôle beaucoup plus faibles, donc conduisant à un matériel lui-même beaucoup plus léger.

Dans cet ordre d'idée, l'invention trouve par exemple, une application particulièrement avantageuse dans la construction des bennes à enrochement. En effet, le caisson épousant alors exactement la forme du berceau avec un très faible écartement, les épaisseurs de leurs parois respectives s'ajoutent, ce qui augmente la résistance de ce matériel aux chocs des rochers au chargement. A titre d'exemple, une semi-benne à enrochement construite en tôle d'acier "CREUSABRO 5000" de 10 mm d'épaisseur n'aura qu'un poids de l'ordre de 6,5 tonnes, alors qu'avec le matériel actuel, le poids d'une semi-benne comparable serait de 10 tonnes. L'économie résultante est donc considérable.

De même, alors que, pour le berceau, un acier à grande résistance à l'abrasion et à haute élasticité est préférable, pour le caisson, on pourra dans certains cas, tels que le transport céréalier, se contenter d'aciers de qualité inférieure, donc meilleur marché, ou rechercher des métaux plus légers, tels que l'aluminium.

Ce matériel présente par ailleurs toute une série d'autres avantages techniques sur le matériel existant :

- grâce à sa construction, la masse est concentrée au centre et diminuée sur les côtés. Le centre de gravité est donc beaucoup plus bas, ce qui assure une meilleure stabilité pour un volume identique

- l'écart entre le chargement et la base du berceau, que l'on peut désigner par "garde" et qui est de l'ordre de 25 à 30 cm et plus dans les matériels connus, est ramené à 2 à 5 cm seulement. Cette diminution considérable est un facteur essentiel qui fait apparaître la présente invention comme un progrès considérable. En effet, il en résulte une bien meilleure stabilité du véhicule, aussi bien sur route, où le risque de renversement est très atténué, qu'au bennage, c'est-à-dire au moment de l'évacuation par levage du caisson. Une conséquence supplémentaire en est une grande diminution de l'usure des pneus, qui peuvent, grâce à l'invention, supporter un kilométrage double

- cette construction permet d'éliminer les ranchers ou renforts de maintien qui créent un cisaillement de la tôle, et sur lesquels le caisson s'use rapidement ; de même, elle permet d'éliminer les traverses de maintien du caisson, ce qui conduit à un gain important en largeur (deux fois 10 cm, épaisseur d'une traverse), ainsi qu'en poids

- enfin, cette construction permet d'abaisser d'environ 30 cm la hauteur des côtés du caisson, ce qui autorise sa charge aux moyens de petits engins.

Pour mieux faire comprendre l'invention, on va maintenant en donner la description d'un exemple de réalisation non limitatif, avec référence au dessin annexé, sur lequel :

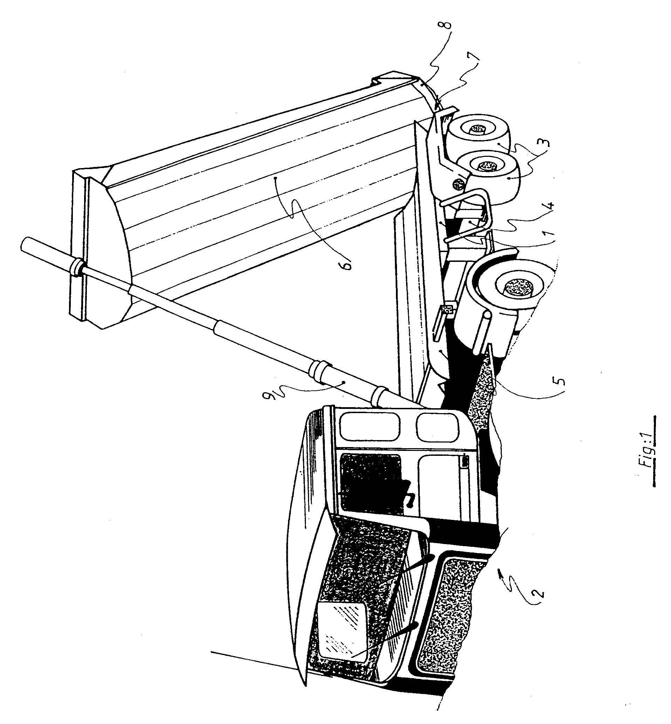

- la figure 1 est une perspective très schématisée d'un camion semi-benne, réalisé selon l'invention, la benne étant en position haute ;

- et la figure 2 est une coupe verticale transversale du même matériel, la benne étant en position basse.

Sur ce dessin, on a représenté schématiquement en 1 le châssis du camion équipé de manière usuelle d'une cabine 2, et de roues 3 portées par des essieux 4.

Le châssis 1 porte un berceau 5 dans lequel repose une benne 6 basculant d'avant en arrière autour d'un axe 7, sous l'action d'un vérin 9 pour permettre le déchargement par un panneau arrière 8 de la charge contenue dans la benne 6.

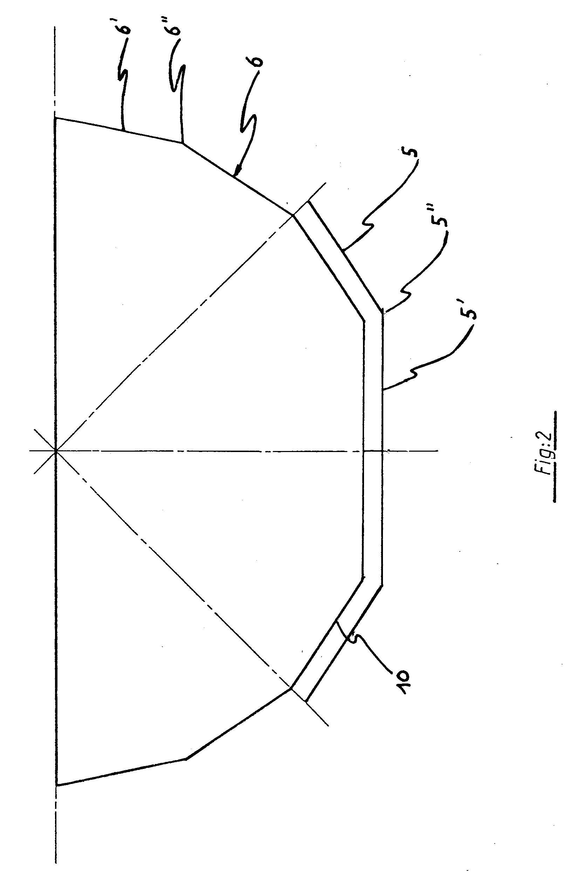

Selon l'invention, le berceau 5 et la benne 6 consistent chacun en un volume qui, dans le cas représenté à titre d'exemple, est d'allure générale prismatique, c'est-à-dire dont la section droite (figure 2) a la forme d'une fraction de polygone, régulier dont le centre commun est situé en 0, sur le diamètre horizontal délimitant le volume 6.

Il en résulte que chaque volume 5 et 6 se compose d'un ensemble de panneaux longitudinaux 5' et 6' réunis le long d'arêtes 5" et 6".

Cette structure en forme de panneaux plans réunis par des arêtes possède la meilleure rigidité et la plus efficace résistance aux efforts de flexion résultant de l'action répétée du vérin 9 sur l'extrémité du volume 6.

Le volume 6, au repos, vient s'encastrer exactement dans le berceau 5, qui lui est concentrique, ce qui a pour conséquence les nombreux avantages énumérés ci-dessus vis-à-vis des matériels existants pour le même usage.

Outre les avantages précédents, on peut mentionner les particularités suivantes :

- ce matériel accepte, sans modification, des essieux de différentes voies, seuls changeant la hauteur et l'emplacement des fixations sur le châssis ou berceau cylindrique

- tous les équipements accessoires (suspension, système de freinage, systèmes de vérins de levage, dispositif d'attelage, roues et pneus, éclairages etc.) demeurent bien entendu les mêmes qu'actuellement, et peuvent aisément être adaptés à cette nouvelle construction

- enfin, du fait de l'encastrement du caisson dans le berceau, ce matériel se comporte également particulièrement bien pour le transport à vide. Toutefois, selon une caractéristique subsidiaire de l'invention, pour éviter que le caisson ne se lève accidentellement, par exemple sous l'effet des secousses ou des vibrations, il est prévu sur le porte-à-faux avant du berceau un vérin horizontal à simple effet, dont la tige mâle s'encastre sous l'action d'un ressort de rappel dans un cône fixé sur le hayon avant du caisson. Au moment du soulèvement de la benne, la mise sous pression hydraulique dégagera cette tige en opposition au ressort. Au retour de la benne, le ressort étant libéré, repousse à nouveau la tige de blocage, sans aucune intervention manuelle.

Bien entendu, la description qui précède n'entraîne aucun caractère limitatif, et la présente demande de brevet englobe au contraire toutes les variantes de réalisations de l'invention, dans toutes ses applications possibles, et notamment tous les rapports d'ouvertures entre le caisson et le berceau, étant entendu que l'angle d'ouverture du berceau est toujours inférieur à l'angle d'ouverture du caisson.

En particulier, la section transversale de chaque volume prismatique peut consister également en un cercle ou en un polygone non régulier. Dans ce dernier cas bien entendu, les dimensions des côtés des polygones correspondant au berceau et au caisson devront être aménagées pour assurer l'encastrement de l'un dans l'autre.

REFERENCES

1. Châssis

2. Cabine
3. Roues
4. Essieux
5. Berceau
5'. Panneau longitudinal
5". Arête
6. Benne
6'. Panneau longitudinal
6". Arête
7. Axe
8. Panneau arrière
9. Vérin

## Revendications

1. Véhicule de type à benne, comportant un caisson (6) basculant d'avant en arrière et reposant à l'arrêt dans un berceau (5) de support fixe sur le châssis (1) du véhicule, caractérisé en ce que ledit caisson (6) et ledit berceau (5) sont constitués par des volumes à sections transversales concentriques de manière que ledit caisson (6) s'encastre dans ledit berceau (5), ledit caisson (6) a une surface inférieure convexe vers le bas dans un plan vertical parallèle à l'axe horizontal transversal de basculement dudit caisson, ledit berceau (5) ayant une surface supérieure concave vers le haut dans ledit plan vertical, lesdites surfaces inférieures convexes et supérieures concaves sont encastrées l'une dans l'autre lorsque ledit caisson (6) est dans sa position la plus basse, de telle sorte que la partie inférieure dudit caisson (6) est encastrée dans ledit berceau (5).

2. Véhicule selon la revendication 1, caractérisé en ce que lesdites sections transversales sont circulaires, le caisson (6) consistant en un volume cylindrique d'ouverture comprise entre 90° et 360° et le berceau (5) consistant en un volume cylindrique d'ouverture comprise entre 90° et 120°.

3. Véhicule selon la revendication 1, caractérisé en ce que lesdites sections transversales sont en forme de polygones réguliers à même nombre de côtés.

4. Véhicule selon la revendication 1, caractérisé en ce que lesdites sections transversales sont en forme de polygones non réguliers dont le nombre et la dimension des côtés se correspondent entre le caisson (6) et le berceau (5) de manière à assurer un encastrement.

5. Véhicule selon la revendication 1, caractérisé en ce que lesdites sections transversales sont circulaires.

## Claims

1. Vehicle of the dumper type, comprising a box (6) tipping from the front to the back and in idle position resting in a cradle (5) for firm support on the chassis (1) of the vehicle, characterized in that said box (6) and said cradle (5) are constituted by bodies having concentric cross-sections so that said box (6) fits in said cradle (5), said box (6) has a lower surface which is convex downwards in a vertical plane parallel to the horizontal transverse tipping axle of said box, said cradle (5) having an upper surface which is concave upwards in said vertical plane, said lower convex and upper concave surfaces fit into each other when said box (6) is in its lowest position, in a manner that the lower part of said box (6) fits in said cradle (5).

2. Vehicle according to claim 1, characterized in that said cross-sections are circular, the box (6) consisting of a cylindrical volume with an opening included between 90° and 360° and the cradle (5) consisting of a cylindrical volume with an opening included between 90° und 120°.

3. Vehicle according to claim 1, characterized in that said cross-sections are in the shape of regular polygons having the same number of sides.

4. Vehicle according to claim 1, characterized in that said cross-sections are in the shape of irregular polygons whose number and dimension of sides correspond, between the box (6) of the cradle (5), so as to allow their fitting.

5. Vehicle according to claim 1, characterized in that said cross-sections are circular.

## Patentansprüche

1. Fahrzeug mit Wagenkasten, bestehend aus einem Kasten (6), der von vorn nach hinten kippt und in Ruhestellung in einer Wiege (5) ruht, die eine feste Auflage auf dem Fahrgestell (1) des Fahrzeugs bildet, dadurch gekennzeichnet, daß der genannte Kasten (6) und die genannte Wiege (5) Räume mit konzentrischen Querschnitten dergestalt bilden, daß der genannte Kasten (6) sich in die genannte Wiege (5) einfügt, wobei der genannte Kasten (6) eine Unterseite besitzt, die in einer vertikalen Ebene, die parallel zur quer verlaufenden, horizontalen Kippachse des genannten Kastens liegt, nach unten konvex ist, wobei die genannte Wiege (5) eine Oberseite besitzt, die in der genannten vertikalen Ebene nach oben konkav ist, wobei die genannten konvexen und konkaven Unter- bzw. Oberseiten sich ineinanderfügen, wenn der genannte Kasten (6) sich in seiner tiefsten Stellung befindet, so daß der untere Teil des genannten Kastens (6) sich in die genannte Wiege (5) einfügt.

2.  Fahrzeug nach Anspruch 1,
    dadurch gekennzeichnet, daß die genannten Querschnitte kreisförmig sind, wobei der Kasten (6) aus einem zylindrischen Raum mit einer Öffnung zwischen 90° und 360° besteht und die Wiege (5) aus einem zylindrischen Raum mit einer Öffnung zwischen 90° und 120° besteht.

3.  Fahrzeug nach Anspruch 1,
    dadurch gekennzeichnet, daß die genannten Querschnitte die Form von regelmäßigen Vielecken mit gleicher Anzahl von Seiten haben.

4.  Fahrzeug nach Anspruch 1,
    dadurch gekennzeichnet, daß die genannten Querschnitte die Form von unregelmäßigen Vielecken haben, wobei sich die jeweiligen Seitenanzahlen und -bemessungen des Kastens (6) und der Wiege (5) entsprechen, so daß ein Einfügen gewährleistet ist.

5.  Fahrzeug nach Anspruch 1,
    dadurch gekennzeichnet, daß die genannten Querschnitte kreisförmig sind.

Fig:1

7

Fig:2